# EUROPÄISCHE PATENTSCHRIFT

(11) **EP 3 822 120 B1**
(45) Veröffentlichungstag und Bekanntmachung des Hinweises auf die Patenterteilung: **13.10.2021**
(21) Anmeldenummer: 19208957.1
(22) Anmeldetag: 13.11.2019
(51) Int. Cl.: B60P 7/13, B60P 3/22, B62D 63/06

(54) **TRANSPORTFAHRZEUG**
TRANSPORT VEHICLE
VÉHICULE DE TRANSPORT

(43) Veröffentlichungstag der Anmeldung: 19.05.2021
(73) Patentinhaber: ADCO Umweltdienste Holding GmbH, 40880 Ratingen (DE)
(72) Erfinder: Steigerwald, Norbert, 63825 Schöllkrippen (DE); Koch, Wilfried, 48480 Lünne (DE)
(74) Vertreter: Andrejewski - Honke Patent- und Rechtsanwälte Partnerschaft mbB

(56) Entgegenhaltungen:
- EP-A1- 2 314 501
- EP-A1- 2 556 973
- WO-A1-80/01372
- BE-A6- 1 012 251
- DE-A1- 2 825 149
- LU-A1- 74 905
- US-A1- 2019 136 497

## Beschreibung

Die Erfindung betrifft ein Transportfahrzeug mit einer Zugmaschine und einem an der Zugmaschine fixierbaren bzw. fixierten Anhänger, wobei die Zugmaschine zumindest eine Vorderachse und zumindest eine Hinterachse sowie einen oberhalb der Hinterachse angeordneten Maschinenrahmen aufweist, wobei der Anhänger zumindest eine Hängerachse und eine oberhalb der Hängerachse angeordnete Ladefläche aufweist. - Das erfindungsgemäße Transportfahrzeug eignet sich insbesondere zum Transport von Sanitäreinrichtungen wie Toilettenkabinen und dergleichen. Diese Sanitäreinrichtungen bzw. Toilettenkabinen werden dabei zweckmäßigerweise auf der Ladefläche des Anhängers aufgenommen. Die Ladefläche des Anhängers eignet sich in diesem Zusammenhang auch zum Transport eines Fäkalientanks. Grundsätzlich können aber auch andere Gegenstände mit dem Transportfahrzeug bzw. auf der Ladefläche des Anhängers transportiert werden. Die Ladefläche des Anhängers kann aber auch Fahrzeugaufbauten wie beispielsweise einen Kofferaufbau, einen Kipperaufbau, einen Abrollkipperaufbau oder einen Pritschenaufbau oder Ähnliches aufweisen.

Transportfahrzeuge der eingangs genannten Art sind aus der Praxis in unterschiedlichen Ausführungsformen bekannt. Der Anhänger wird bei diesen bekannten Transportfahrzeugen beispielsweise über Ringkupplungen, Sattelkupplungen oder Kugelkopfkupplungen mit der Zugmaschine verbunden. Bei vielen bekannten Transportfahrzeugen sind das Ankuppeln und das Abkuppeln des Anhängers relativ aufwändig und störanfällig. Die Anhänger vollziehen im Fahrbetrieb insbesondere bei unebener Fahrbahn mehr oder weniger starke Relativbewegungen zur Zugmaschine. Dadurch kommt es zu Verschiebungen des Ladegutes und nicht selten auch zu Beschädigungen der transportierten Gegenstände. Das ist insbesondere bei empfindlicherem Ladegut, beispielsweise bei Sanitäreinrichtungen wie Toilettenkabinen und dergleichen sehr nachteilhaft. Bei vielen bekannten Transportfahrzeugen weist die Kupplungseinrichtung zum Ankuppeln des Anhängers langfristig relativ starke Verschleißerscheinungen auf, so dass die Lebensdauer dieser Kupplungseinrichtungen zu wünschen übrig lässt.

Aus BE 1 012 251 A6 ist ein Transportfahrzeug der oben beschriebenen Art bekannt. Hier ist an dem Maschinenrahmen der Zugmaschine eine Mehrzahl von Fixierungselementen zur Fixierung des Anhängers an der Zugmaschine vorgesehen. Der Anhänger weist Komplementär-Fixierungselemente auf. Auch diese Fixierungsmaßnahmen weisen die oben bereits beschriebenen Nachteile auf. - Entsprechendes gilt auch für ein aus DE 28 25 149 A1 bekanntes Transportfahrzeug.

Der Erfindung liegt das technische Problem zugrunde, ein Transportfahrzeug der eingangs beschriebenen Art anzugeben, bei dem die vorstehend beschriebenen Nachteile auf effektive und einfache Weise vermieden werden können.

Zur Lösung dieses technischen Problems lehrt die Erfindung ein Transportfahrzeug mit einer Zugmaschine und einem an der Zugmaschine fixierbaren bzw. fixierten Anhänger, wobei die Zugmaschine zumindest eine Vorderachse und zumindest eine Hinterachse sowie einen oberhalb der Hinterachse angeordneten Maschinenrahmen aufweist, wobei der Anhänger zumindest eine Hängerachse und eine oberhalb der Hängerachse angeordnete Ladefläche aufweist,
wobei an dem Maschinenrahmen der Zugmaschine zumindest drei, vorzugsweise zumindest vier und insbesondere vier Fixierungselemente zur Fixierung des Anhängers an der Zugmaschine vorgesehen sind, wobei an dem Anhänger zumindest drei, vorzugsweise zumindest vier und insbesondere vier Komplementär-Fixierungselemente vorhanden sind, wobei jedes Komplementär-Fixierungselement des Anhängers an einem Fixierungselement der Zugmaschine fixierbar ist bzw. fixiert ist
und wobei die Verbindung bzw. die Fixierung zwischen den Fixierungselementen und den Komplementär-Fixierungselementen als Twist-Lock-Verriegelung bzw. als Twist-Lock-Containerverriegelung ausgebildet ist.

Erfindungsgemäß ist der Anhänger an die Zugmaschine ankuppelbar und auch wieder abkuppelbar. Sowohl das Ankuppeln des Anhängers als auch das Abkuppeln des Anhängers ist dabei auf einfache und wenig kraftaufwändige Weise möglich. Die Ladefläche des Anhängers kann in Ladeflächenabschnitte unterteilt sein, die gegebenenfalls höhenmäßig versetzt zueinander angeordnet sind. Auf der Ladefläche des Anhängers des erfindungsgemäßen Transportfahrzeuges werden vorzugsweise Sanitäreinrichtungen wie Toilettenkabinen und dergleichen transportiert. Auch ein Fäkalientank ist auf einfache Weise mit dem erfindungsgemäßen Anhänger bzw. mit dem erfindungsgemäßen Transportfahrzeug transportierbar.

Maschinenrahmen meint im Rahmen der Erfindung insbesondere den an die Rückseite der Fahrerkabine der Zugmaschine anschließenden Rahmen. Der Maschinenrahmen erstreckt sich somit in der Regel von der Rückseite der Fahrerkabine bis zum Ende der Zugmaschine. Es liegt im Rahmen der Erfindung, dass die Hinterachse der Zugmaschine die Antriebsachse der Zugmaschine bzw. des Transportfahrzeuges ist. Zweckmäßigerweise beträgt das Gesamtgewicht der Zugmaschine bis zu 3,5 t. Vorzugsweise beträgt das Gesamtgewicht des Anhängers ebenfalls bis zu 3,5 t.

Nach besonders bevorzugter Ausführungsform der Erfindung ist der Anhänger an der Zugmaschine spielfrei bzw. im Wesentlichen spielfrei fixiert. Zweckmäßigerweise sind die Komplementär-Fixierungselemente des Anhängers an den Fixierungselementen der Zugmaschine spielfrei bzw. im Wesentlichen spielfrei fixiert. Diese Fixierung verhindert insbesondere Rotationsbewegungen und/oder Translationsbewegungen des Anhängers relativ zur Zugmaschine.

Es empfiehlt sich, dass der Maschinenrahmen der Zugmaschine zumindest zwei bzw. zwei parallele bzw. im Wesentlichen parallele Rahmenprofile aufweist. Zweckmäßigerweise ist jeweils zumindest ein Fixierungselement an einem Rahmenprofil befestigt und vorzugsweise sind zumindest zwei, insbesondere zwei Fixierungselemente an jedem Rahmenprofil befestigt. Die Rahmenprofile erstrecken sich in Längsrichtung des Fahrzeuges und bevorzugt über die Länge des Maschinenrahmens in Längsrichtung des Fahrzeuges. Es liegt im Rahmen der Erfindung, dass die Rahmenprofile die Längsränder des Maschinenrahmens des Zugfahrzeuges bilden. Zweckmäßigerweise begrenzen die Rahmenprofile den Maschinenrahmen zu den beiden Seiten des Fahrzeuges hin.

Eine besonders bevorzugte Ausführungsform der Erfindung ist dadurch gekennzeichnet, dass die gedachten Verbindungslinien zwischen vier Fixierungselementen des Maschinenrahmens ein Rechteck bzw. ein Parallelogramm aufspannen. Vorzugsweise nimmt dabei das Rechteck bzw. Parallelogramm zumindest 30 %, insbesondere zumindest 35 %, bevorzugt zumindest 40 % und sehr bevorzugt zumindest 45 % der von dem Maschinenrahmen aufgespannten Fläche ein. Eine besonders bevorzugte Ausführungsform der Erfindung zeichnet sich dadurch aus, dass zwei der Fixierungselemente an gegenüberliegenden Seiten des Maschinenrahmens mit gleichem Abstand zum vorderen Ende des Maschinenrahmens angeordnet sind. Empfohlenermaßen sind von vier Fixierungselementen jeweils zwei Fixierungselemente an gegenüberliegenden Seiten des Maschinenrahmens mit gleichem Abstand zum vorderen Ende des Maschinenrahmens angeordnet.

Gemäß einer empfohlenen Ausführungsform der Erfindung beträgt der Abstand von zwei in Fahrzeuglängsrichtung hintereinander angeordneten Fixierungselementen des Maschinenrahmens zumindest 20 %, insbesondere zumindest 25 %, bevorzugt zumindest 30 % und sehr bevorzugt zumindest 35 % der Länge des Maschinenrahmens in Fahrzeuglängsrichtung. Nach einer Ausführungsform beträgt dieser Abstand zumindest 40 %, insbesondere zumindest 45 % der Länge des Maschinenrahmens in Fahrzeuglängsrichtung. Der Abstand kann auch größer bzw. deutlich größer als 45 % der Länge des Maschinenrahmens sein.

Eine besonders bevorzugte Ausführungsform der Erfindung ist dadurch gekennzeichnet, dass der Anhänger einen unterhalb seiner Ladefläche angeordneten - und zweckmäßigerweise die Ladefläche abstützenden - Hängerrahmen aufweist. Empfohlenermaßen sind die Komplementär-Fixierungselemente an dem Hängerrahmen des Anhängers vorgesehen bzw. befestigt. Es empfiehlt sich, dass zumindest vier und insbesondere vier Komplementär-Fixierungselemente an dem Hängerrahmen des Anhängers befestigt sind. Vorzugsweise spannen die gedachten Verbindungslinien zwischen vier Komplementär-Fixierungselementen des Anhängers bzw. des Hängerrahmens ein Rechteck bzw. ein Parallelogramm auf. Es hat sich bewährt, dass der Hängerrahmen des Anhängers zumindest zwei bzw. zwei zueinander parallele bzw. im Wesentlichen zueinander parallele sich in Längsrichtung des Anhängers erstreckende Hängerprofile aufweist. Vorzugsweise sind zumindest zwei, insbesondere zumindest vier bzw. vier Komplementär-Fixierungselemente an den Hängerprofilen des Hängerrahmens befestigt.

Eine sehr bewährte Ausführungsform der Erfindung ist dadurch gekennzeichnet, dass sich in dem an der Zugmaschine fixierten bzw. angeschlossenen Zustand des Anhängers die Ladefläche und vorzugsweise der Hängerrahmen des Anhängers über zumindest 70 %, insbesondere über zumindest 75 %, bevorzugt über zumindest 80 % und sehr bevorzugt über zumindest 85 % der Länge des Maschinenrahmens in Fahrzeuglängsrichtung erstrecken. Vorzugsweise deckt in dem an der Zugmaschine fixierten bzw. angeschlossenen Zustand des Anhängers die Ladefläche des Anhängers zumindest 70 %, insbesondere zumindest 75 %, bevorzugt zumindest 80 % und sehr bevorzugt zumindest 85 % der von dem Maschinenrahmen aufgespannten Fläche ab. Die von dem Maschinenrahmen aufgespannte Fläche meint im Rahmen der Erfindung insbesondere die sich zwischen den beiden äußeren Rahmenprofilen des Maschinenrahmens erstreckende Fläche.

Es liegt im Rahmen der Erfindung, dass in dem an der Zugmaschine fixierten bzw. angeschlossenen Zustand des Anhängers der Hängerrahmen des Anhängers auf dem Maschinenrahmen der Zugmaschine aufliegt. Vorzugsweise liegen dabei die Hängerprofile des Hängerrahmens auf den Rahmenprofilen des Maschinenrahmens auf. Zweckmäßigerweise liegen hierbei die Komplementär-Fixierungselemente des Anhängers auf den Fixierungselementen der Zugmaschine auf. Fernerhin liegt es im Rahmen der Erfindung, dass in dem an der Zugmaschine fixierten bzw. angeschlossenen Zustand des Anhängers der Hängerrahmen des Anhängers über die Fixierungselemente und Komplementär-Fixierungselemente spielfrei bzw. im Wesentlichen spielfrei mit dem Maschinenrahmen der Zugmaschine verspannt ist.

Erfindungsgemäß ist die Verbindung bzw. die Fixierung zwischen den Fixierungselementen und den Komplementär-Fixierungselementen als Twist-Lock-Verriegelung bzw. als Twist-Lock-Containerverriegelung ausgebildet. Eine solche Twist-Lock-Verriegelungskomponente mit Fixierungselement und Komplementär-Fixierungselement weist empfohlenermaßen zumindest ein bzw. ein zusätzliches Kopplungselement auf, das relativ zu dem Fixierungselement und relativ zu dem Komplementär-Fixierungselement bewegt wird - vorzugsweise verdreht wird - und auf diese Weise eine (lösbare) Verriegelung bzw. Kopplung zwischen Fixierungselement und Komplementär-Fixierungselement herstellt. Es liegt im Rahmen der Erfindung, dass die Verbindung zwischen den Fixierungselementen und den Komplementär-Fixierungselementen als lösbare bzw. als jederzeit lösbare Verbindung ausgebildet ist, so dass der Anhänger bei Bedarf jederzeit von der Zugmaschine lösbar bzw. abkoppelbar ist.

Eine sehr bevorzugte Ausführungsform der Erfindung ist dadurch gekennzeichnet, dass in dem an der Zugmaschine fixierten bzw. angeschlossenen Zustand des Anhängers die Hängerachse bzw. die vorderste Hängerachse des Anhängers mit geringem Abstand a zu der Hinterachse bzw. zu der hintersten Achse der Zugmaschine angeordnet ist und dass dieser Abstand a vorzugsweise weniger als 110 cm, insbesondere weniger als 100 cm und bevorzugt weniger als 95 cm beträgt. Nach empfohlener Ausführungsform der Erfindung beträgt der Abstand a 70 bis 100 cm, insbesondere 75 bis 95 cm. - Es liegt im Rahmen der Erfindung, dass die Hinterachse bzw. die hinterste Achse der Zugmaschine und die Hängerachse bzw. die vorderste Hängerachse als luftgefederte Achsen ausgebildet sind. Zweckmäßigerweise ist dabei die Luftfederung der beiden Achsen parallel geschaltet und vorzugsweise ist die Luftfederung so eingestellt, dass sich die zu befördernde Last 1:1 auf die beiden Achsen verteilt. - Es liegt weiterhin im Rahmen der Erfindung, dass eine Bremse des Anhängers hydraulisch mit dem Bremssystem der Zugmaschine gekoppelt ist. Zweckmäßigerweise kann sowohl die Zugmaschine als auch der Anhänger ABS-gebremst werden.

Eine besonders bevorzugte Ausführungsform der Erfindung ist dadurch gekennzeichnet, dass der Maschinenrahmen der Zugmaschine am hinteren Ende zumindest ein vorkragendes Kupplungsprofil aufweist und empfohlenermaßen zumindest zwei, insbesondere zwei vorkragende Kupplungsprofile aufweist. Zweckmäßigerweise kuppeln diese vorkragenden Kupplungsprofile mit Komplementär-Kupplungsprofilen des Anhängers. Vorzugsweise fahren die Kupplungsprofile des Maschinenrahmens beim Ankuppeln des Anhängers in Komplementär-Kupplungsprofile des Anhängers ein, die als Kupplungshohlprofile ausgebildet sind. Durch diese zusätzliche Kupplung wird die Fixierung des Anhängers an der Zugmaschine weiter stabilisiert.

Der Erfindung liegt die Erkenntnis zugrunde, dass bei dem erfindungsgemäßen Transportfahrzeug eine sehr stabile und funktionssichere Kupplung des Anhängers an die Zugmaschine möglich ist. Das Ankuppeln und Abkuppeln des Anhängers ist dabei auf sehr einfache und wenig aufwändige Weise möglich und nichtsdestoweniger wird der Anhänger einwandfrei und funktionssicher an die Zugmaschine angekuppelt. Im Fahrbetrieb des Transportfahrzeuges finden störende Translationsbewegungen und Rotationsbewegungen des Anhängers relativ zur Zugmaschine nicht statt und insbesondere können Verwindungen und Wackelbewegungen des Anhängers vollständig vermieden werden. Dadurch kann das auf der Ladefläche transportierte Ladegut ohne durch Bewegungen des Anhängers verursachte nachteilhafte Verschiebungen funktionssicher transportiert werden. Das gilt insbesondere für empfindliches Ladegut, wie beispielsweise Sanitäreinrichtungen in Form von Toilettenkabinen und dergleichen. Die erfindungsgemäße Kupplungseinrichtung in Form der Fixierungselemente und Komplementär-Fixierungselemente zeichnet sich durch langfristige Verschleißfreiheit aus und somit durch eine relativ lange Lebensdauer. Hervorzuheben ist, dass die erfindungsgemäßen Maßnahmen auf wenig aufwändige und somit kostengünstige Weise realisierbar sind.

Das erfindungsgemäße Transportfahrzeug weist fernerhin Vorteile in Bezug auf das Fahrverhalten im Vergleich zu aus dem Stand der Technik bekannten Transportfahrzeugen auf. Das ist insbesondere auf die relativ geringe Gesamtzuglänge des Fahrzeuges zurückzuführen. So ist ein Rückwärtsfahren mit dem erfindungsgemäßen Transportfahrzeug ohne Probleme möglich. Eine bessere Fahrdynamik ergibt sich durch das erfindungsgemäße Verspannen des Anhängers mit der Zugmaschine und zwar insbesondere bei beweglicher Ladung auf dem Anhänger. Vorteile bringt auch die bevorzugt vorgesehene gleichmäßige Belastung der Hinterachse des Zugfahrzeuges und der Anhängerachse. Weiterhin ist hervorzuheben, dass das erfindungsgemäße Kupplungselement ein vorteilhaft geringes Gewicht aufweist und insbesondere ein geringeres Gewicht aufweist als eine Sattelkupplung.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer Zugmaschine eines erfindungsgemäßen Transportfahrzeuges,
- Fig.2: eine Seitenansicht eines Anhängers des erfindungsgemäßen Transportfahrzeuges,
- Fig. 3: eine Seitenansicht des erfindungsgemäßen Transportfahrzeuges aus der Zugmaschine und dem daran angekuppelten Anhänger,

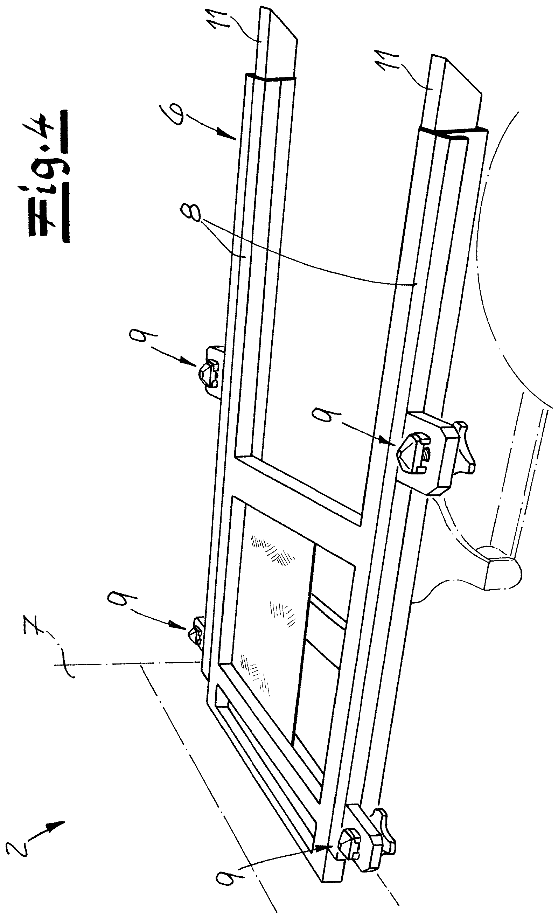

- Fig. 4: eine Draufsicht auf den Maschinenrahmen der Zugmaschine,

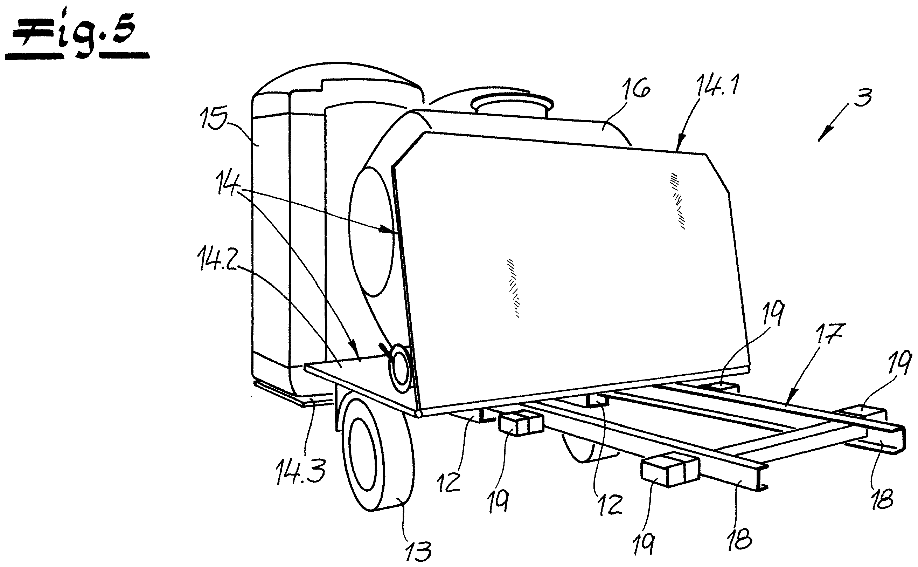

- Fig. 5: eine Draufsicht auf den Hängerrahmen des Anhängers und
- Fig. 6: eine vergrößerte Ansicht eines Fixierungselementes und eines Komplementär-Fixierungselementes zur Fixierung des Anhängers an der Zugmaschine.

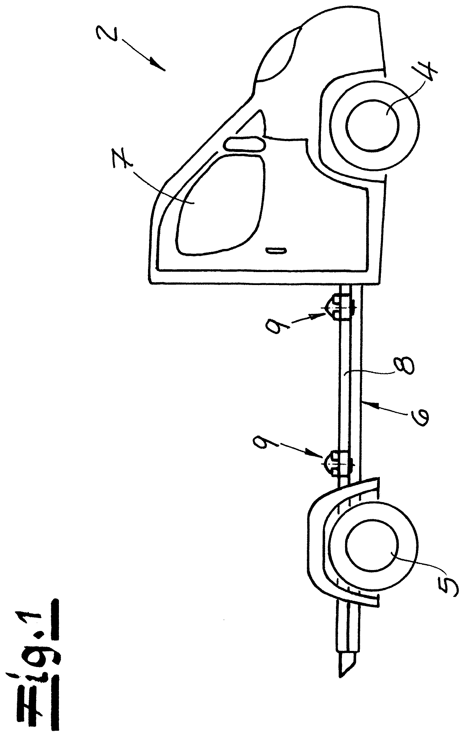

Die Figuren betreffen ein Transportfahrzeug 1 mit einer Zugmaschine 2 und einem an der Zugmaschine 2 fixierbaren bzw. fixierten Anhänger 3. Die Zugmaschine 2 (Fig. 1) weist im Ausführungsbeispiel eine Vorderachse 4 und eine Hinterachse 5 sowie einen oberhalb der Hinterachse 5 angeordneten Maschinenrahmen 6 auf. Im vorderen Bereich der Zugmaschine 2 ist zweckmäßigerweise und im Ausführungsbeispiel eine Fahrerkabine 7 angeordnet. Der Maschinenrahmen 6 erstreckt sich von dem hinteren Ende der Fahrerkabine 7 bis zum Ende der Zugmaschine 2. Vorzugsweise und im Ausführungsbeispiel weist der Maschinenrahmen 6 zwei parallele Rahmenprofile 8 auf, die sich über die Länge des Maschinenrahmens 6 erstrecken. An jedem dieser Rahmenprofile 8 sind nach empfohlener Ausführungsform und im Ausführungsbeispiel zwei in Längsrichtung des jeweiligen Rahmenprofils 8 hintereinander angeordnete Fixierungselemente 9 befestigt, die zur Fixierung des Anhängers 3 an der Zugmaschine 2 dienen. Die Fixierungselemente 9 sind zweckmäßigerweise jeweils Bestandteil einer Twist-Lock-Verriegelungskomponente 10 zur Fixierung des Anhängers 3, die weiter unten noch erläutert wird.

Vorzugsweise und im Ausführungsbeispiel sind die Fixierungselemente 9 in Form eines Rechteckes an dem Maschinenrahmen 6 angeordnet. Bewährtermaßen und im Ausführungsbeispiel befinden sich jeweils zwei Fixierungselemente 9 auf gleicher Höhe bzw. auf gleicher Länge des Maschinenrahmens 6. Am Ende des Maschinenrahmens 6 der Zugmaschine 2 kragen nach bewährter Ausführungsform und im Ausführungsbeispiel zwei Kupplungsprofile 11 nach hinten hin vor, die beim Ankuppeln des Anhängers 3 an die Zugmaschine 2 in entsprechende Kupplungshohlprofile 12 des Anhängers 3 einfahren bzw. eingeschoben werden. Dadurch wird die Verbindung zwischen Zugmaschine 2 und Anhänger 3 weiter stabilisiert.

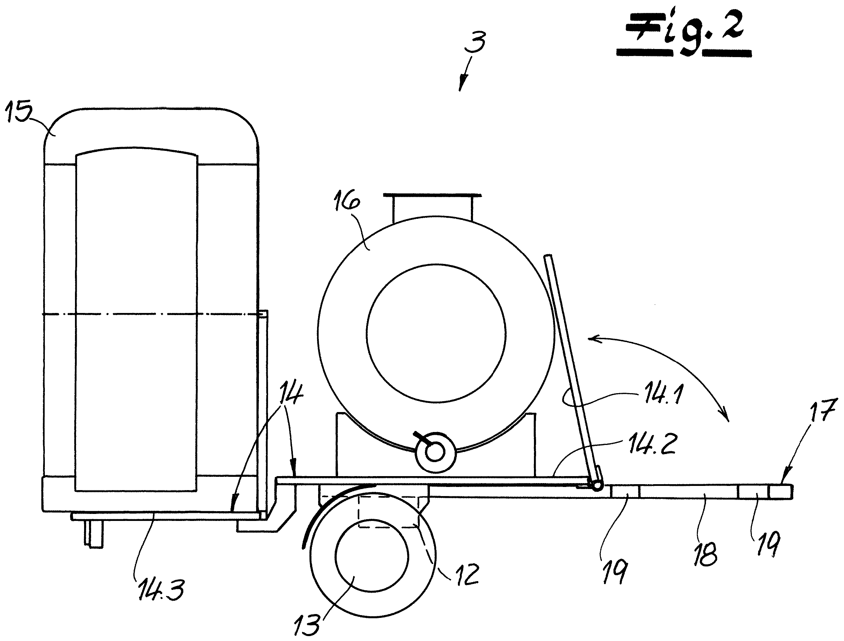

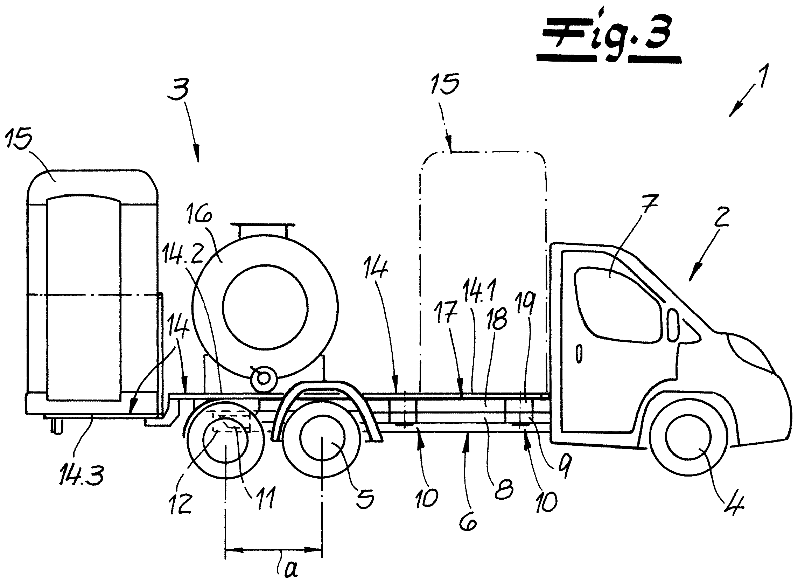

In der Fig. 2 ist eine bevorzugte Ausführungsform eines Anhängers 3 für ein erfindungsgemäßes Transportfahrzeug 1 dargestellt. Zweckmäßigerweise und im Ausführungsbeispiel weist der Anhänger 3 eine Hängerachse 13 auf sowie eine oberhalb der Hängerachse 13 angeordnete Ladefläche 14. Die Ladefläche 14 ist im Ausführungsbeispiel in drei Ladeflächenabschnitte 14.1, 14.2 und 14.3 unterteilt. Das erfindungsgemäße Transportfahrzeug 1 bzw. der Anhänger 3 des Transportfahrzeuges eignet sich insbesondere zum Transport von Sanitäreinrichtungen. Im Ausführungsbeispiel sind auf dem hinteren Ladeflächenabschnitt 14.3 der Ladefläche 14 zwei Toilettenkabinen 15 aufgenommen sowie auf dem mittleren Ladeflächenabschnitt 14.2 ein Fäkalientank 16. Auch auf dem vorderen Ladeflächenabschnitt 14.1 können beispielsweise zwei Toilettenkabinen 15 aufgenommen werden. Nach bevorzugter Ausführungsform und im Ausführungsbeispiel ist der vordere Ladeflächenabschnitt 14.1 als hochklappbarer Ladeflächenabschnitt 14.1 ausgebildet (siehe Fig. 2). Im hochgeklappten Zustand des Ladeflächenabschnittes 14 kann eine einfache Kupplung des Anhängers 3 an die Zugmaschine 2 durchgeführt werden. Im heruntergeklappten Zustand des vorderen Ladeflächenabschnittes 14.1 (Fig. 3) können grundsätzlich zwei Toilettenkabinen 15 oder dergleichen auf diesem Ladeflächenabschnitt 14.1 aufgenommen werden.

Zweckmäßigerweise und im Ausführungsbeispiel weist der Anhänger 3 einen unterhalb seiner Ladefläche 14 angeordneten Hängerrahmen 17 auf. Der Hängerrahmen 17 ist bevorzugt und im Ausführungsbeispiel mit zwei zueinander parallelen sich in Längsrichtung des Anhängers 3 erstreckenden Hängerprofilen 18 ausgestattet. An dem Hängerrahmen 17 bzw. an den beiden Hängerprofilen 18 sind nach bewährter Ausführungsform und im Ausführungsbeispiel vier Komplementär-Fixierungselemente 19 zur Fixierung des Anhängers 3 an der Zugmaschine 2 vorgesehen. Dabei sind vorzugsweise und im Ausführungsbeispiel an jedem Hängerprofil 18 zwei in Längsrichtung des Anhängers 3 bzw. in Längsrichtung der Hängerprofile 18 hintereinander angeordnete Komplementär-Fixierungselemente 19 vorhanden. Zweckmäßigerweise und im Ausführungsbeispiel sind auch die Komplementär-Fixierungselemente 19 in Form eines Rechteckes angeordnet. Jeweils zwei Komplementär-Fixierungselemente 19 sind empfohlenermaßen und im Ausführungsbeispiel auf gleicher Höhe bzw. auf gleicher Länge des Anhängers 3 bzw. der Hängerprofile 18 angeordnet. Zur Fixierung des Anhängers 3 an der Zugmaschine 2 werden die Komplementär-Fixierungselemente 19 des Anhängers 3 mit den Fixierungselementen 9 der Zugmaschine 2 im Rahmen einer Twist-Lock-Verriegelung kombiniert.

Die Fig. 3 zeigt ein erfindungsgemäßes Transportfahrzeug mit dem an der Zugmaschine 2 fixierten Anhänger 3. In diesem Zustand deckt vorzugsweise und im Ausführungsbeispiel die Ladefläche 14 des Anhängers 3 den Maschinenrahmen 6 der Zugmaschine 2 quasi vollständig ab. Zweckmäßigerweise und im Ausführungsbeispiel liegt in diesem fixierten Zustand der Hängerrahmen 17 des Anhängers 3 auf dem Maschinenrahmen 6 der Zugmaschine 2 auf und bevorzugt und im Ausführungsbeispiel liegen die Hängerprofile 18 des Anhängers 3 auf den Rahmenprofilen 8 des Maschinenrahmens 6 auf. Weiterhin liegen bewährtermaßen und im Ausführungsbeispiel die Komplementär-Fixierungselemente 19 des Anhängers 3 auf den Fixierungselementen 9 der Zugmaschine 2 auf und die Komplementär-Fixierungselemente 19 sind an den Fixierungselementen 9 im Rahmen einer Twist-Lock-Verriegelung fixiert. Insoweit weist das Transportfahrzeug 1 zweckmäßigerweise und im Ausführungsbeispiel vier Twist-Lock-Verriegelungskomponenten 10 zur Fixierung des Anhängers 3 an der Zugmaschine 2 auf. In dem fixierten Zustand des Anhängers 3 an der Zugmaschine 2 sind fernerhin bevorzugt und im Ausführungsbeispiel die hinteren Kupplungsprofile 11 des Maschinenrahmens 6 der Zugmaschine 2 in Kupplungshohlprofile 12 des Anhängers 3 eingefahren.

In dem in der Fig. 3 dargestellten fixierten Zustand des Anhängers 3 an der Zugmaschine 2 ist zweckmäßigerweise und im Ausführungsbeispiel die Hängerachse 13 des Anhängers 3 mit geringem Abstand a zu der Hinterachse 5 der Zugmaschine 2 angeordnet. Dieser Abstand a mag im Ausführungsbeispiel 80 cm betragen. - Es liegt im Übrigen im Rahmen der Erfindung, dass die Fixierung zwischen den Fixierungselementen 9 und den Komplementär-Fixierungselementen 19 als jederzeit lösbare Verbindung ausgebildet ist, so dass der Anhänger 3 bei Bedarf jederzeit von der Zugmaschine 2 lösbar bzw. abkoppelbar ist.

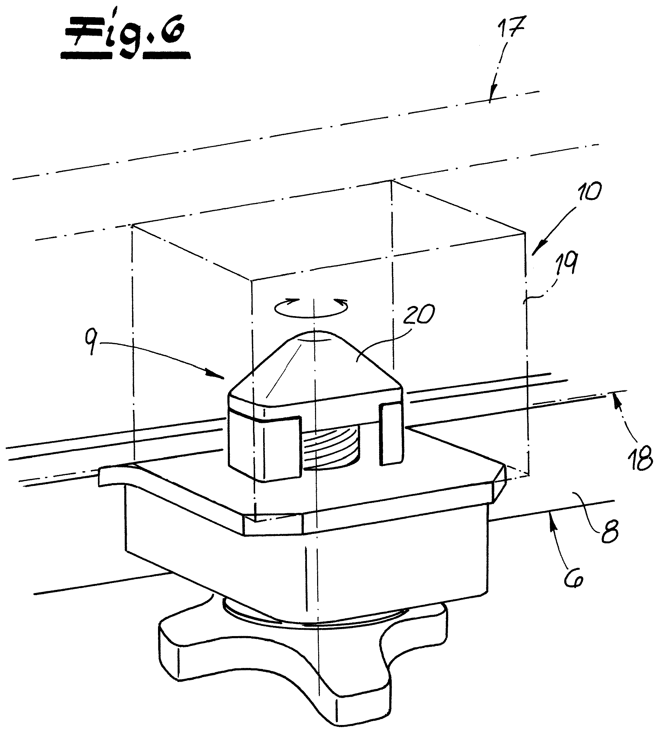

Die Fig. 6 zeigt eine vergrößerte Ansicht einer der bevorzugt vorgesehenen vier Twist-Lock-Verriegelungskomponenten 10 zur Fixierung des Anhängers 3 an der Zugmaschine 2. Jede Twist-Lock-Verriegelungskomponente 10 weist vorzugsweise ein Fixierungselement 9 am Maschinenrahmen 6 der Zugmaschine 2 auf sowie ein Komplementär-Fixierungselement 19 am Hängerrahmen 17 des Anhängers 3. Fernerhin ist zweckmäßigerweise ein Kopplungselement 20 zur gegenseitigen Verriegelung von Fixierungselement 9 und Komplementär-Fixierungselement 19 vorgesehen. Bewährtermaßen und im Ausführungsbeispiel weist jede Twist-Lock-Verriegelungskomponente 10 neben einem Fixierungselement 9 und einem Komplementär-Fixierungselement 19 ein Kopplungselement 20 auf, das für die Verriegelung relativ zum Fixierungselement 9 und relativ zum Komplementär-Fixierungselement 19 bewegt wird und zwar bevorzugt und im Ausführungsbeispiel verdreht wird. Dadurch wird eine Verriegelung bzw. Kopplung zwischen Fixierungselement 9 und Komplementär-Fixierungselement 19 realisiert. Diese Verriegelung bzw. Kopplung ist vorzugsweise durch eine entsprechende Bewegung bzw. Verdrehung des Kopplungselementes 20 wieder lösbar. Für eine einfachere Verriegelung der Twist-Lock-Verriegelungskomponenten 10 ist der vordere Ladeflächenabschnitt 14.1 des Anhängers 3 hochklappbar (siehe Fig. 2) und nach der Verriegelung bzw. Fixierung kann dieser Ladeflächenabschnitt 14.1 auf den Hängerrahmen 17 bzw. in Richtung des Maschinenrahmens 6 heruntergeklappt werden. Dieser heruntergeklappte Zustand des Ladeflächenabschnittes 14.1 ist in der Fig. 3 gezeigt. Die Twist-Lock-Verriegelungskomponenten 10 sind jederzeit lösbar, so dass der Anhänger 3 bei Bedarf von der Zugmaschine 2 abkoppelbar ist.

Ein erfindungsgemäßes Transportfahrzeug 1 ist vorzugsweise als Sanitäreinrichtungs-Transportfahrzeug 1 für den Transport von Sanitäreinrichtungen eingerichtet. Für diesen Zweck hat sich das erfindungsgemäße Transportfahrzeug 1 besonders bewährt. Zweckmäßigerweise werden mit dem Transportfahrzeug 1 zumindest zwei, bevorzugt zumindest drei Toilettenkabinen 15 transportiert und zwar empfohlenermaßen im aufgestellten Zustand, so dass der Boden der Toilettenkabinen 15 der Ladefläche 14 des Anhängers 3 zugewandt ist. Hierdurch ist zum einen ein platzsparender Transport einer Mehrzahl von Toilettenkabinen 15 möglich und zum anderen können die Toilettenkabinen 15 mit dem erfindungsgemäßen Transportfahrzeug 1 funktionssicher und beschädigungsfrei transportiert werden. Der Erfindung liegt die Erkenntnis zugrunde, dass dies aufgrund der erfindungsgemäßen Kopplung des Anhängers 3 an die Zugmaschine 2 besonders einfach und problemlos möglich ist.

## Patentansprüche

1. Transportfahrzeug (1) mit einer Zugmaschine (2) und einem an der Zugmaschine (2) fixierbaren Anhänger (3), wobei die Zugmaschine (2) zumindest eine Vorderachse (4) und zumindest eine Hinterachse (5) sowie einen oberhalb der Hinterachse (5) angeordneten Maschinenrahmen (6) aufweist, wobei der Anhänger (3) zumindest eine Hängerachse (13) und eine oberhalb der Hängerachse (13) angeordnete Ladefläche (14) aufweist,
wobei an dem Maschinenrahmen (6) der Zugmaschine (2) zumindest drei, vorzugsweise zumindest vier und insbesondere vier Fixierungselemente (9) zur Fixierung des Anhängers (3) an der Zugmaschine (2) vorgesehen sind, wobei an dem Anhänger (3) zumindest drei, vorzugsweise zumindest vier und insbesondere vier Komplementär-Fixierungselemente (19) vorhanden sind und wobei jedes Komplementär-Fixierungselement (19) des Anhängers (3) an einem Fixierungselement (9) der Zugmaschine (2) fixierbar ist bzw. fixiert ist,
**dadurch gekennzeichnet, dass** die Verbindung bzw. die Fixierung zwischen den Fixierungselementen (9) und den Komplementär-Fixierungselementen (19) als Twist-Lock-Verriegelung bzw. als Twist-Lock-Containerverriegelung ausgebildet ist.

2. Transportfahrzeug nach Anspruch 1, **dadurch gekennzeichnet, dass** der Anhänger (3) an der Zugmaschine (2) bzw. wobei die Komplementär-Fixierungselemente (19) des Anhängers (3) an den Fixierungselementen (9) der Zugmaschine (2) spielfrei bzw. im Wesentlichen spielfrei fixiert ist/sind und wobei diese Fixierung insbesondere Rotationsbewegungen und Translationsbewegungen des Anhängers (3) relativ zu der Zugmaschine (2) verhindert.

3. Transportfahrzeug nach einem der Ansprüche 1 oder 2, **dadurch gekennzeichnet, dass** der Maschinenrahmen (6) der Zugmaschine (2) zwei parallele bzw. im Wesentlichen parallele Rahmenprofile (8) aufweist und wobei jeweils zumindest ein Fixierungselement (9) an einem Rahmenprofil (8) befestigt ist und wobei vorzugsweise zumindest zwei, insbesondere zwei Fixierungselemente (9) an jedem Rahmenprofil (8) befestigt sind.

4. Transportfahrzeug nach einem der Ansprüche 1 bis 3, **dadurch gekennzeichnet, dass** die gedachten Verbindungslinien zwischen vier Fixierungselementen (9) des Maschinenrahmens (6) ein Rechteck bzw. ein Parallelogramm aufspannen.

5. Transportfahrzeug nach einem der Ansprüche 1 bis 4, **dadurch gekennzeichnet, dass** der Abstand von zwei in Fahrzeuglängsrichtung hintereinander angeordneten Fixierungselementen (9) des Maschinenrahmens (6) zumindest 20 %, insbesondere zumindest 25 % und bevorzugt zumindest 30 % der Länge des Maschinenrahmens (6) in Fahrzeuglängsrichtung beträgt.

6. Transportfahrzeug nach einem der Ansprüche 1 bis 5, **dadurch gekennzeichnet, dass** der Anhänger (3) einen unterhalb seiner Ladefläche (14) angeordneten - und vorzugsweise die Ladefläche (14) abstützenden - Hängerrahmen (17) aufweist, wobei die Komplementär-Fixierungselemente (19) an dem Hängerrahmen (17) vorgesehen bzw. angeschlossen sind.

7. Transportfahrzeug nach Anspruch 6, **dadurch gekennzeichnet, dass** der Hängerrahmen (17) des Anhängers (3) zwei zueinander parallele bzw. im Wesentlichen zueinander parallele sich in Längsrichtung des Anhängers (3) erstreckende Hängerprofile (18) aufweist und wobei zweckmäßigerweise zumindest zwei, vorzugsweise zumindest vier bzw. vier Komplementär-Fixierungselemente (19) an den Hängerprofilen (18) befestigt sind.

8. Transportfahrzeug nach einem der Ansprüche 1 bis 7, **dadurch gekennzeichnet, dass** sich in dem an der Zugmaschine (2) fixierten bzw. angeschlossenen Zustand des Anhängers (3) die Ladefläche (14) und vorzugsweise der Hängerrahmen (17) des Anhängers (3) über zumindest 70 %, insbesondere über zumindest 75 %, bevorzugt über zumindest 80 % und sehr bevorzugt über zumindest 85 % der Länge des Maschinenrahmens (6) in Fahrzeuglängsrichtung erstreckt.

9. Transportfahrzeug nach einem der Ansprüche 1 bis 8, **dadurch gekennzeichnet, dass** in dem an der Zugmaschine (2) fixierten bzw. angeschlossenen Zustand des Anhängers (3) die Ladefläche (14) des Anhängers (3) zumindest 70 %, insbesondere zumindest 75 %, bevorzugt zumindest 80 % und sehr bevorzugt zumindest 85 % der von dem Maschinenrahmen (6) aufgespannten Fläche abdeckt.

10. Transportfahrzeug nach einem der Ansprüche 6 bis 9, **dadurch gekennzeichnet, dass** in dem an der Zugmaschine (2) fixierten bzw. angeschlossenen Zustand des Anhängers (3) der Hängerrahmen (17) auf dem Maschinenrahmen (6) aufliegt und vorzugsweise die Hängerprofile (18) des Anhängers (3) auf den Rahmenprofilen (8) des Maschinenrahmens (6) aufliegen und zweckmäßigerweise die Komplementär-Fixierungselemente (19) des Anhängers (3) auf den Fixierungselementen (9) der Zugmaschine (2) aufliegen.

11. Transportfahrzeug nach einem der Ansprüche 6 bis 10, **dadurch gekennzeichnet, dass** in dem an der Zugmaschine (2) fixierten bzw. angeschlossenen Zustand des Anhängers (3) der Hängerrahmen (17) des Anhängers (3) über die Fixierungselemente (9) bzw. Komplementär-Fixierungselemente (19) spielfrei bzw. im Wesentlichen spielfrei mit dem Maschinenrahmen (6) der Zugmaschine (2) verspannt ist.

12. Transportfahrzeug nach einem der Ansprüche 1 bis 11, **dadurch**
**gekennzeichnet, dass** die Verbindung zwischen Fixierungselementen (9) und Komplementär-Fixierungselementen (19) als lösbare Verbindung ausgebildet ist, so dass der Anhänger (3) von der Zugmaschine (2) lösbar bzw. abkoppelbar ist.

13. Transportfahrzeug nach einem der Ansprüche 1 bis 12, **dadurch**
**gekennzeichnet, dass** in dem an der Zugmaschine (2) fixierten bzw. angeschlossenen Zustand des Anhängers (3) die Hängerachse (13) bzw. die vorderste Hängerachse (13) des Anhängers (3) mit geringem Abstand a zu der Hinterachse (5) bzw. zu der hintersten Achse der Zugmaschine (2) angeordnet ist und wobei dieser Abstand a vorzugsweise weniger als 110 cm, insbesondere weniger als 100 cm beträgt und bevorzugt 75 bis 95 cm beträgt.

## Claims

1. A transport vehicle (1) comprising a tractor (2) and a trailer (3), which can be fixed to the tractor (2), wherein the tractor (2) has at least one front axle (4) and at least one rear axle (5) as well as a machine frame (6) arranged above the rear axle (5), wherein the trailer (3) has at least one trailer axle (13) and a loading area (14) arranged above the trailer axle (13),
wherein at least three, preferably at least four, and in particular four fixing elements (9) for fixing the trailer (3) to the tractor (2) are provided on the machine frame (6) of the tractor (2), wherein at least three, preferably at least four, and in particular four complementary fixing elements (19) are present on the trailer (3), and wherein each complementary fixing element (19) of the trailer (3) can be fixed or is fixed, respectively, to a fixing element (9) of the tractor (2),
**characterized in that** the connection or the fixation, respectively, between the fixing elements (9) and the complementary fixing elements (19) is formed as twist-lock locking mechanism or as twist-lock container locking mechanism, respectively.

2. The transport vehicle according to claim 1, **characterized in that** the trailer (3) is fixed to the tractor (2) or wherein the complementary fixing elements (19) of the trailer (3) is/are fixed to the fixing elements (9) of the tractor (2) without play or essentially without play, respectively, and wherein this fixation prevents in particular rotational movements and translatory movements of the trailer (3) relative to the tractor (2).

3. The transport vehicle according to one of claims 1 or 2, **characterized in that** the machine frame (6) of the tractor (2) has two parallel or essentially parallel frame profiles (8), respectively, and therein at least one fixing element (9) is in each case fixed to a frame profile (8), and wherein preferably at least two, in particular two fixing elements (9) are fastened to each frame profile (8).

4. The transport vehicle according to one of claims 1 to 3, **characterized in that** the imaginary connecting lines between four fixing elements (9) of the machine frame (6) span a rectangle or a parallelogram, respectively.

5. The transport vehicle according to one of claims 1 to 4, **characterized in that** the distance of two fixing elements (9) of the machine frame (6), which are arranged one behind the other in the vehicle longitudinal direction, is at least 20 %, in particular at least 25 %, and preferably at least 30 %, of the length of the machine frame (6) in the vehicle longitudinal direction.

6. The transport vehicle according to one of claims 1 to 5, **characterized in that** the trailer (3) has a trailer frame (17), which is arranged below its loading area (14), and preferably supports the loading area (14), wherein the complementary fixing elements (19) are provided on or connected to, respectively, the trailer frame (17).

7. The transport vehicle according to claim 6, **characterized in that** the trailer frame (17) of the trailer (3) has two trailer profiles (18), which extend parallel to one another or essentially parallel to one another, respectively, in the longitudinal direction of the trailer (3), and wherein advantageously at least two, preferably at least four, or four complementary fixing elements (19), respectively, are fastened to the trailer profiles (18).

8. The transport vehicle according to one of claims 1 to 7, **characterized in that** when the trailer (3) is fixed or connected to the tractor (2), respectively, the loading area (14) and preferably the trailer frame (17) of the trailer (3) extends at least over 70 %, in particular over at least 75 %, preferably over at least 80 %, and highly preferably over at least 85 %, of the length of the machine frame (6) in the vehicle longitudinal direction.

9. The transport vehicle according to one of claims 1 to 8, **characterized in that** when the trailer (3) is fixed or connected to the tractor (2), respectively, the loading area (14) of the trailer (3) covers at least 70 %, in particular at least 75 %, preferably at least 80 %, and highly preferably at least 85 %, of the area spanned by the machine frame (6).

10. The transport vehicle according to one of claims 6 to 9, **characterized in that** when the trailer (3) is fixed or connected to the tractor (2), respectively, the trailer frame (17) bears on the machine frame (6), and the trailer profiles (18) of the trailer (3) preferably bear on the frame profiles (8) of the machine frame (6), and the complementary fixing elements (19) of the trailer (3) advantageously bear on the fixing elements (9) of the tractor (2).

11. The transport vehicle according to one of claims 6 to 10, **characterized in that** when the trailer (3) is fixed or connected to the tractor (2), respectively, the trailer frame (17) of the trailer (3) is clamped to the machine frame (6) of the tractor (2) without play or essentially without play, respectively, via the fixing elements (9) or complementary fixing elements (19), respectively.

12. The transport vehicle according to one of claims 1 to 11, **characterized in that** the connection between fixing elements (9) and complementary fixing elements (19) is formed as releasable connection, so that the trailer (3) can be released or detached, respectively, from the tractor (2).

13. The transport vehicle according to one of claims 1 to 12, **characterized in that** when the trailer (3) is fixed or connected to the tractor (2), respectively, the trailer axle (13) or the frontmost trailer axle (13) of the trailer (3), respectively, is arranged at a small distance a to the rear axle (5) or to the rearmost axle of the tractor (2), respectively, and wherein this distance a is preferably less than 110 cm, in particular less than 100 cm, and is preferably 75 to 95 cm.

## Revendications

1. Véhicule de transport (1) avec une machine de traction (2) et une remorque (3) apte à être fixée à la machine de traction (2), dans lequel la machine de traction (2) présente au moins un essieu avant (4) et au moins un essieu arrière (5) ainsi qu'un cadre de machine (6) disposé au-dessus de l'essieu arrière (5), dans lequel la remorque (3) présente au moins un essieu de remorque (13) et une surface de chargement (14) disposée au-dessus de l'essieu de remorque (13),
dans lequel au moins trois éléments de fixation (9), de préférence au moins quatre et en particulier quatre, sont prévus sur le cadre de machine (6) de la machine de traction (2) pour la fixation de la remorque (3) à la machine de traction (2), dans lequel au moins trois éléments de fixation complémentaires (19), de préférence au moins quatre et en particulier quatre, sont prévus sur la remorque (3), et dans lequel chaque élément de fixation complémentaire (19) de la remorque (3) peut être fixé ou est fixé à un élément de fixation (9) de la machine de traction (2),
**caractérisé en ce que** la liaison ou la fixation entre les éléments de fixation (9) et les éléments de fixation complémentaires (19) est réalisée comme un verrou tournant ou comme un verrou tournant de conteneur.

2. Véhicule de transport selon la revendication 1, **caractérisé en ce que** la remorque (3) est fixée à la machine de traction (2) ou dans lequel les éléments de fixation complémentaires (19) de le remorque (3) sont fixés aux éléments de fixation (9) de la machine de traction (2) sans jeu ou quasiment sans jeu, et dans lequel cette fixation empêche en particulier des mouvements de rotation et des mouvements de translation de la remorque (3) par rapport à la machine de traction (2) .

3. Véhicule de transport selon l'une des revendications 1 ou 2, **caractérisé en ce que** le cadre de machine (6) de la machine de traction (2) présente deux profilés de cadre (8) parallèles ou quasiment parallèles et dans lequel respectivement au moins un élément de fixation (9) est fixé à un profilé de cadre (8) et dans lequel de préférence au moins deux éléments de fixation (9), en particulier deux, sont fixés à chaque profilé de cadre (8).

4. Véhicule de transport selon l'une des revendications 1 à 3, **caractérisé en ce que** les lignes de liaison imaginaires entre quatre éléments de fixation (9) du cadre de machine (6) forment un rectangle ou un parallélogramme.

5. Véhicule de transport selon l'une des revendications 1 à 4, **caractérisé en ce que** la distance entre deux éléments de fixation (9) du cadre de machine (6) disposés l'un derrière l'autre dans la direction longitudinale du véhicule mesure au moins 20 %, en particulier au moins 25 % et de préférence au moins 30 % de la longueur du cadre de machine (6) dans la direction longitudinale du véhicule.

6. Véhicule de transport selon l'une des revendications 1 à 5, **caractérisé en ce que** la remorque (3) présente un cadre de remorque (17) disposé sous la surface de chargement (14) de celle-ci - et soutenant de préférence la surface de chargement (14), dans lequel les éléments de fixation complémentaires (19) sont prévus ou connectés au cadre de remorque (17).

7. Véhicule de transport selon la revendication 6, **caractérisé en ce que** le cadre de remorque (17) de la remorque (3) présente deux profilés de remorque (18) parallèles entre eux ou quasiment parallèles entre eux, lesquels s'étendent dans la direction longitudinale de la remorque (3), et dans lequel au moins deux éléments de fixation complémentaires (19), de préférence au moins quatre ou en particulier, sont avantageusement fixés aux profilés de remorque (18).

8. Véhicule de transport selon l'une des revendications 1 à 7, **caractérisé en ce que** lorsque la remorque (3) est fixée ou connectée à la machine de traction (2), la surface de chargement (14) et de préférence le cadre de remorque (17) de la remorque (3) s'étend sur au moins 70 %, en particulier sur au moins 75 %, de préférence sur au moins 80 % et plus préférentiellement sur au moins 85 % de la longueur du cadre de machine (6) dans la direction longitudinale du véhicule.

9. Véhicule de transport selon l'une des revendications 1 à 8, **caractérisé en ce que** lorsque la remorque (3) est fixée ou connectée à la machine de traction (2), la surface de chargement (14) de la remorque (3) recouvre au moins 70 %, en particulier au moins 75 %, de préférence au moins 80 % et plus préférentiellement au moins 85 % de la surface définie par le cadre de machine (6) .

10. Véhicule de transport selon l'une des revendications 6 à 9, **caractérisé en ce que** lorsque la remorque (3) est fixée ou connectée à la machine de traction (2), le cadre de remorque (17) s'appuie sur le cadre de machine (6) et les profilés de remorque (18) de la remorque (3) s'appuient de préférence sur les profilés de cadre (8) du cadre de machine (6), et les éléments de fixation complémentaires (19) de la remorque (3) s'appuient avantageusement sur les éléments de fixation (9) de la machine de traction (2).

11. Véhicule de transport selon l'une des revendications 6 à 10, **caractérisé en ce que** lorsque la remorque (3) est fixée ou connectée à la machine de traction (2), le cadre de remorque (17) de la remorque (3) est serré sans jeu ou quasiment sans jeu avec le cadre de machine (6) de la machine de traction (2) par le biais des éléments de fixation (9) ou des éléments de fixation complémentaires (19).

12. Véhicule de transport selon l'une des revendications 1 à 11, **caractérisé en ce que** la liaison entre les éléments de fixation (9) et les éléments de fixation complémentaires (19) est réalisée comme une liaison détachable, de sorte que la remorque (3) peut être détachée ou désaccouplée de la machine de traction (2).

13. Véhicule de transport selon l'une des revendications 1 à 12, **caractérisé en ce que** lorsque la remorque (3) est fixée ou connectée à la machine de traction (2), l'essieu de remorque (13) ou l'essieu de remorque (13) le plus avancé de la remorque (3) est disposé à une distance réduite a par rapport à l'essieu arrière (5) ou à l'essieu le plus reculé de la machine de traction (2) et dans lequel cette distance a mesure avantageusement moins de 110 cm, en particulier moins de 100 cm et de préférence entre 75 et 95 cm.
